# EUROPÄISCHE PATENTSCHRIFT

(11) **EP 2 459 908 B1**
(45) Veröffentlichungstag und Bekanntmachung des Hinweises auf die Patenterteilung: **17.04.2013**
(21) Anmeldenummer: 10722140.0
(22) Anmeldetag: 10.06.2010
(51) Int. Cl.: F16K 11/07, F16K 39/04

(54) **DRUCKREGELVENTIL**
PRESSURE REGULATING VALVE
SOUPAPE DE RÉGLAGE DE PRESSION

(30) Priorität: 29.07.2009 DE 102009028092
(43) Veröffentlichungstag der Anmeldung: 06.06.2012
(73) Patentinhaber: Robert Bosch GmbH, 70442 Stuttgart (DE)
(72) Erfinder: LUO, Benjin, 70437 Stuttgart (DE); SEN, Mehmet-Fatih, 71282 Hemmingen (DE); WAURO, Frank, 70825 Korntal-Muenchingen (DE); JAYANTH, David, Koramangala Bangalore Karnataka 560034 (IN); PILZ, Martin, 71554 Weissach Im Tal (DE)
(86) Internationale Anmeldenummer: PCT/EP2010/058141
(87) Internationale Veröffentlichungsnummer: WO 2011/012366

(56) Entgegenhaltungen:
- EP-A1- 0 851 160
- EP-A2- 1 197 695
- US-A- 4 220 178

## Beschreibung

Die Erfindung betrifft ein Druckregelventil nach dem Oberbegriff des Anspruchs 1.

### Stand der Technik

US 2007/0051414 A1 beschreibt ein Druckregelventil mit einem Ventilschieber, der einen der Regelöffnung gegenüberliegenden geometrisch spezifisch ausgestalteten Abschnitt mir reduziertem Durchmesser ("Einschnürung") aufweist. US 4,220,178 beschreibt ebenfalls ein Druckregelventil mit einem Ventilschieber. Der Ventilschieber weist zwischen Regelöffnung und Ablauföffnung ebenfalls eine Einschnürung auf. Derartige Druckregelventile werden beispielsweise in Automatikgetrieben von Kraftfahrzeugen zur Betätigung dort vorhandener hydraulischer Kupplungen eingesetzt.

EP 0851160 offenbart ein Druckregelventil, wobei die Breite der Ringnut größer als die Breite der Zulauföffnung ist.

Das der Erfindung zugrunde liegende Problem wird durch ein Druckregelventil mit den Merkmalen des Anspruchs 1 gelöst. Weiterbildungen der Erfindung sind in Unteransprüchen genannt. Für die Erfindung wichtige Merkmale finden sich darüber hinaus in der nachfolgenden Beschreibung und in der Zeichnung, wobei die Merkmale sowohl in Alleinstellung als auch in ganz unterschiedlichen Kombinationen für die Erfindung wichtig sein können, ohne dass hierauf nochmals explizit hingewiesen wird.

Durch die umlaufende Nut (Ringnut), die der Zulauföffnung gegenüber liegt, wird ein Strömungsprofil erzeugt, welches die hydraulischen Kräfte in radialer Richtung minimiert und hierdurch die Kupplungsfüllzeit verkürzt. Die erfindungsgemäße Nut macht sich insbesondere beim "Aufreißen" der Zulauf-Steuerkante bemerkbar. Denn sobald die Zulauf-Steuerkante "aufreißt", also die Zulauföffnung mindestens etwas freigibt, strömt das Fluid in Richtung Regelöffnung. In diesem Fall sorgt die umlaufende Ringnut im Ventilschieber für einen schnellen Druckausgleich in Umfangsrichtung des Ventilschiebers, wodurch ein auf den Ventilschieber wirkende hydraulische Querkraft zumindest vermindert wird. Dies gilt insbesondere dann, wenn nur ein einziger Zulaufkanal vorgesehen ist Mit dieser Maßnahme wird gleichzeitig eine symmetrische Zuströmung an der Zulauf-Steuerkante zur Regelöffnung hin erreicht. Insgesamt wird durch die Erfindung die Strömung des Hydraulikfluids verbessert und Instabilitäten an der Zulauf-Steuerkante vermieden.

Dabei werden die besagten Querkräfte zusätzlich reduziert, wenn die Zulauföffnung nicht beispielsweise durch eine umlaufende Ringnut im Gehäuse gebildet wird, sondern zwei gegenüber liegende Durchbrüche im Gehäuse, beispielsweise zwei radiale Kanalbohrungen, umfasst. Dies ist allerdings nur dann sinnvoll wenn auch eine beidseitige Strömung in einem Ventilblock, in den das Druckregelventil eingesetzt werden kann, vorgesehen ist. Mit dieser Maßnahme werden die hydraulischen Querkräfte ebenfalls reduziert. Am besten im Hinblick auf die Querkraftreduktion ist es natürlich, wenn eine Vielzahl von um den Umfang gleichmäßig verteilt angeordneter Zulauföffnungen in Form radialer Kanäle vorgesehen ist.

Für das Strömungsprofil des Hydraulikfluids und die Reduktion von Leckagen ist es vorteilhaft, wenn die Ringnut von der Zulauf-Steuerkante beabstandet ist.

Ebenfalls ist es für die Strömungsführung günstig, wenn die Breite der Ringnut kleiner ist als die Breite der Zulauföffnung. Dies gilt insbesondere dann, wenn die Zulauföffnung durch eine umlaufende Ringnut im Gehäuse gebildet wird. Eine solche umlaufende Ringnut trägt zusätzlich zu einem Druckausgleich über den Umfang des Ventilschiebers bei.

Als besonders vorteilhaft hat es sich herausgestellt, wenn unmittelbar nach der Steuerkante der Winkel einer Schrägfläche der Einschnürung am Ventilschieber an der Zulauf-Steuerkante zu einer Längsachse des Ventilschiebers zwischen 52° und 72° und bevorzugt zwischen 60° und 64° liegt, stärker bevorzugt 62° beträgt. Dieser Winkel führt zu einer ausreichend starken Umlenkung der zunächst radialen Hydraulikströmung, ohne dass durch diese Umlenkung unerwünscht starke Turbulenzen und Druckverluste entstehen.

Eine weitere vorteilhafte Ausgestaltung zeichnet sich dadurch aus, dass in einem von der Einlass-Steuerkante aus gesehen weiteren Verlauf die Einschnürung am Ventilschieber einen konkav gekrümmten Abschnitt aufweist. Dieser konkav gekrümmte Abschnitt führt zu einer weiteren allmählichen Umlenkung der Hydraulikströmung zur Regelöffnung hin, die durch die konkave Krümmung allmählich erfolgt und daher nur mit geringen Druckverlusten verbunden ist. Damit wird der Strahl entlang der Krümmung so geführt, dass das erfindungsgemäße Druckregelventil sehr dynamisch sein kann, aber auch stabil arbeitet und unempfindlich auf Störungen reagiert.

Als besonders vorteilhaft hat sich hierbei ein Krümmungsradius des konkav gekrümmten Abschnitts von ungefähr 3,5 mm für diesen Ventilschieber herausgestellt, wobei dieser Wert u. a. auch von den Eigenschaften des Hydraulikfluids und den allgemeinen Abmessungen des Druckregelventils abhängt. Er kann gegebenenfalls auch etwas größer oder etwas kleiner sein.

Nochmals verstärkt werden die bereits oben beschriebenen Vorteile dann, wenn durch den konkav gekrümmten Abschnitt der Durchmesser der Einschnürung am Ventilschieber ein Minimum aufweist und die Einschnürung im weiteren Verlauf nach dem konkav gekrümmten Abschnitt einen Abschnitt mit konstantem Durchmesser aufweist. Der Beginn des Abschnitts mit konstantem Durchmesser ist so gewählt, dass der Strahl beim Durchströmen der konkaven Abschnitte genau an dieser Stelle den Kontakt zum Ventilschieber verliert und tangential weiter strömt und direkt auf die Innenringnut des Regelkanals trifft.

In Weiterbildung hierzu wird vorgeschlagen, dass der Abschnitt mit konstantem Durchmesser von einem radialen Wandabschnitt begrenzt wird, an dessen radial äußerem Ende eine Ablauf-Steuerkante gebildet ist, die mit einer Ablauföffnung im Gehäuse zusammenwirkt. Damit erstreckt sich die Einschnürung von der Zulauf-Steuerkante bis zur Ablauf-Steuerkante, was auch fertigungstechnische Vorteile hat. Insgesamt wird durch die so vorgeschlagene Geometrie der Einschnürung am Ventilschieber ein im Hinblick auf die hydraulischen Kräfte besonders optimales Strömungsprofil erzeugt. Insbesondere werden die hydraulischen Kräfte in axialer Richtung minimiert, was die Kupplungsfüllzeit bei der Anwendung an einem Kraftfahrzeuggetriebe verkürzt. Ein solches Ventil kann daher äußerst dynamisch funktionieren, ist auf der anderen Seite jedoch stabil und unempfindlich gegenüber Störungen.

Dies gilt umso mehr, wenn die Breite der Regelöffnung nur wenig kleiner ist als die Breite der Einschnürung am Ventilschieber von der Zulauf-Steuerkante bis zur Ablauf-Steuerkante. Hierdurch wird die in der Einschnürung des Ventilschiebers geführte Strömung besonders gut im Flansch wieder aufgefangen. Dies gilt wiederum insbesondere dann, wenn die Regelöffnung durch eine umlaufende Innenringnut im Gehäuse gebildet wird.

Nachfolgend wird eine Ausführungsform der Erfindung unter Bezugnahme auf die beiliegende Zeichnung beispielhaft erläutert.

In der Zeichnung zeigen:
Figur 1 einen Längsschnitt durch ein Druckregelventil; und
Figur 2 ein Detail II von Figur 1.

Ein Druckregelventil trägt in der Zeichnung insgesamt das Bezugszeichen 10. Es dient zur Steuerung bzw. Betätigung einer hydraulischen Kupplung in einem nicht gezeigten Automatikgetriebe, beispielsweise in einem Stufenautomaten eines Kraftfahrzeugs, oder aber auch zur Steuerung beziehungsweise Betätigung von Stellzylindern in Doppelkupplungsgetrieben und CVT. Das Druckregelventil 10 umfasst ein Flanschgehäuse 12, in dem ein kolbenartiger Ventilschieber 14 gleitend geführt ist. Über einen Koppelstift 16 kann eine Stirnfläche 18 des Ventilschiebers 14 von einer elektromagnetischen Betätigungseinrichtung 20 beaufschlagt werden. Am entgegengesetzten Ende 22 des Ventilschiebers 14 greift eine Druckfeder 24 an, die sich an einer Verschlussschraube 26 des Flanschgehäuses 12 abstützt.

Das Druckregelventil 10 ist in Einbaulage fluidisch mit einem Zulaufanschluss 28, einem Regelanschluss 30, einem Ablaufanschluss 32 und einem Rücklaufanschluss ("Feedbackkanal") 34 verbunden. Rücklaufanschluss 34 und Regelanschluss 30 sind fluidisch miteinander verbunden. Der Zulaufanschluss 28 ist mit einer in der Zeichnung nicht dargestellten Druckquelle, beispielsweise einer Hydraulikpumpe verbunden. Der Regelanschluss 30 führt zu der zu betätigenden hydraulischen Kupplung, an ihm liegt also der zu regelnde Hydraulikdruck an. Der Ablaufanschluss 32 ist mit einem Niederdruckbereich verbunden. Hierzu verfügt das Flanschgehäuse 12 über vier axial voneinander beabstandete und radial verlaufende Kanäle 36 bis 42, welche in ihnen zugeordnete Ringnuten 44 bis 50 münden. Die Ringnuten 44 bis 50 sind in einer inneren Wandfläche einer Führungsbohrung 52 ausgebildet, in der der Ventilschieber 14 im Flanschgehäuse 12 geführt ist.

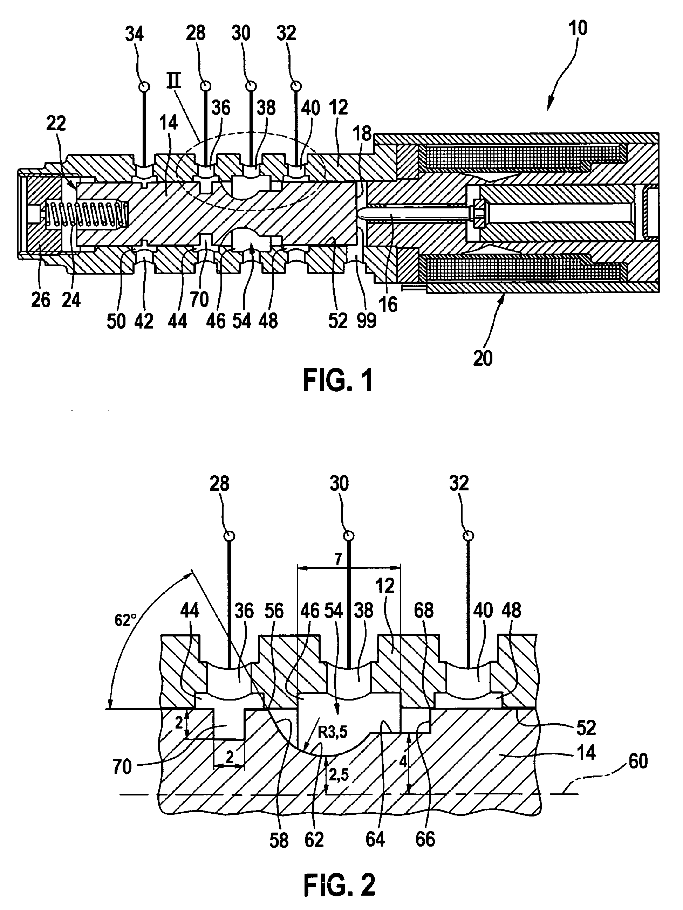

Der Ventilschieber 14 verfügt über einen Abschnitt 54, der einen reduzierten Durchmesser aufweist, wobei der Verlauf des Durchmesser spezifisch ist und weiter unten genauer erläutert wird. Der Abschnitt 54 des Ventilschiebers 14 wird nachfolgend vereinfachend als "Einschnürung" bezeichnet. Er erstreckt sich über die gesamte Umfangsrichtung des Ventilschiebers 14, ist also insgesamt rotationssymmetrisch. Die Einschnürung im Kolben 54 ist stärker im Detail in Figur 2 dargestellt, sie liegt der Regel-Ringnut 46 in etwa gegenüber. Wie aus Figur 2 ersichtlich ist, wird die Einschnürung 54 auf ihrer in Figur 2 linken Seite durch eine Zulauf-Steuerkante 56 begrenzt, die in noch darzustellender Art und Weise mit der Zulauf-Ringnut 44 zusammenwirkt. Die Einschnürung 54 ist insoweit zu der Zulauf-Steuerkante 56 unmittelbar benachbart. Direkt an der Steuerkante 56 weist die Einschnürung 54 eine gerade verlaufende Schrägfläche 58 auf, die zu einer Längsachse 60 des Ventilschiebers 14 einen Winkel von ungefähr 62° aufweist.

Folgt man der Kontur der Einschnürung 54 in Figur 2 weiter nach rechts, schließt sich an die Schrägfläche 58 ein konkav gekrümmter Abschnitt 62 an. Dessen Krümmungsradius beträgt vorliegend 3,5 mm. Durch den konkav gekrümmten Abschnitt 62 weist der Radius des Ventilschiebers 14 im Bereich der Einschnürung 54 ein Minimum auf, vorliegend 2,5 mm. Der konkav gekrümmte Abschnitt 62 erstreckt sich etwas über dieses Minimum hinaus bis zu einem Abschnitt 64 mit einem konstanten Radius von 4 mm. Dieser wird wiederum von einem radialen Wandabschnitt 66 begrenzt, an dessen radial äußerem Ende eine Ablauf-Steuerkante 68 gebildet ist, die mit der Ablauf-Ringnut 48 in der Führungsbohrung 52 des Flanschgehäuses 12 in ebenfalls noch darzustellender Art und Weise zusammenwirkt. Somit erstreckt sich die Einschnürung 54 in axialer Richtung von der Zulauf-Steuerkante 56 bis zur Ablauf-Steuerkante 68. Man erkennt aus Figur 2, dass die Breite der Regel-Ringnut 46 etwas kleiner ist als die axiale Erstreckung (Breite) der Einschnürung 54 von der Zulauf-Steuerkante 56 bis zur Ablauf-Steuerkante 68. Bei der in Figur 2 dargestellten Ausführungsform beträgt die Breite der Regel-Ringnut 46 7 mm.

Wie insbesondere aus Figur 2 ersichtlich ist, weist der Ventilschieber 14 eine umlaufende Ringnut 70 auf, welche auf der von der Einschnürung 54 abgewandten Seite der Zulauf-Steuerkante 56 und in etwa gegenüber von der Zulauf-Ringnut 44 liegt. Die Ringnut 70 hat bei der in der Zeichnung dargestellten Ausführungsform einen quadratischen Querschnitt mit einer Kantenlänge von 2 mm. Sie ist in axialer Richtung des Ventilschiebers 14 gesehen von der Zulauf-Steuerkante 56 in etwa um dieses Maß beabstandet. Man erkennt aus Figur 2, dass die Breite der Ringnut 70 kleiner ist als die Breite der Zulauf-Ringnut 44.

Das Druckregelventil 10 arbeitet folgendermaßen: Der gewünschte Druck am Regelanschluss 30 wird durch eine entsprechende Bestromung der elektromagnetischen Betätigungseinrichtung 20 eingestellt. Steigt der Druck am Regelanschluss 30 über den gewünschten Druck, bewegt sich der Ventilschieber 14, der insoweit eine "Druckwaage" darstellt, in den Figuren 1 und 2 nach rechts, bis die Ablauf-Steuerkante 68 die Ablauf-Ringnut 48 erreicht, so dass Hydraulikfluid abströmen kann. Die Ablauf-Ringnut 48 bildet insoweit eine Ablauföffnung. Sinkt der Druck am Regelanschluss 30 unter das gewünschte Niveau, bewegt sich der Ventilschieber 14 in den Figuren 1 und 2 nach links, bis die Zulauf-Steuerkante 56 im Bereich der Zulauf-Ringnut 44 liegt. Die Zulauf-Ringnut 44 bildet insoweit eine Zulauföffnung. Nun kann Hydraulikfluid vom Zulauf-Anschluss 28 über den Zulaufkanal 36 und die Zulauf-Ringnut 44 in den Bereich der Einschnürung 54 strömen und so den Druck an der Regel-Ringnut 46 ("Regelöffnung") wieder erhöhen. Erreicht der Regeldruck seinen gewünschten Wert, entsteht ein Kräftegleichgewicht und der Ventilschieber 14 steht.

Durch die der Einschnürung 54 axial vorgelagerte Ringnut 70 im Ventilschieber 14 wird ein Druckausgleich über den Umfang des Ventilschiebers 14 erreicht, der eine symmetrische Zuströmung des Hydraulikfluids in Richtung Einschnürung 54 gewährleistet. Durch die besondere Geometrie der Kontur der Einschnürung 54 wird darüber hinaus ein stabiler Strömungsverlauf gewährleistet, der in axialer Richtung des Ventilschiebers 14 wirkende Strömungskräfte reduziert. Auch werden hydraulische Querkräfte im dynamischen Betrieb des Druckregelventils 10, insbesondere beim Kupplungs-Füllvorgang, also wenn eine Druckerhöhung am Regelanschluss 30 gewünscht ist, reduziert. Der Beginn des Abschnitts 64 mit konstantem Durchmesser ist so gewählt, dass der Strahl des Hydraulikfluids beim Durchströmen des konkaven Abschnitts 62 genau an dieser Stelle den Kontakt zum Ventilschieber 14 verliert und tangential weiter strömt und direkt auf die Innenringnut bzw. Regel-Ringnut 46 des Regelkanals 38 trifft. Letztlich wird hierdurch ein hochdynamischer Betrieb des Druckregelventils gewährleistet, welches dennoch stabil arbeitet und unempfindlich gegenüber Störungen ist.

Der Vollständigkeit halber ist ein Leckageanschluss in Figur 1 mit 99 bezeichnet.

## Patentansprüche

1. Druckregelventil (10), insbesondere zum Einsatz in einem Kraftfahrzeug-Automatikgetriebe, mit einem Gehäuse (12), einem in dem Gehäuse (12) geführten Ventilschieber (14), an dem mindestens eine Zulauf-Steuerkante (56) ausgebildet ist, die mit einer Zulauföffnung (44) im Gehäuse (12) zusammenwirkt, wobei zu der Zulauf-Steuerkante (56) benachbart eine Einschnürung (54) am Ventilschieber (14) vorhanden ist, die einer Regelöffnung (46) im Gehäuse (12) wenigstens in etwa gegenüber liegt, wobei der Ventilschieber (14) eine umlaufende Ringnut (70) aufweist, welche auf der von der Einschnürung (54) abgewandten Seite der Zulauf-Steuerkante (56) und in etwa gegenüber von der Zulauföffnung (44) liegt, **dadurch gekennzeichnet, dass** die Breite der Ringnut (70) kleiner ist als die Breite der Zulauföffnung (44).

2. Druckregelventil (10) nach Anspruch 1, **dadurch gekennzeichnet, dass** die Ringnut (70) von der Zulauf-Steuerkante (56) beabstandet ist.

3. Druckregelventil (10) nach Anspruch 3, **dadurch gekennzeichnet, dass** die Zulauföffnung durch eine umlaufende Ringnut (44) im Gehäuse (12) gebildet wird.

4. Druckregelventil (10) nach einem der vorhergehenden Ansprüche, **dadurch gekennzeichnet, dass** der Winkel einer Schrägfläche (58) der Einschnürung (54) an der Zulauf-Steuerkante (56) zu einer Längsachse (60) des Ventilschiebers (14) zwischen 52° und 72° und bevorzugt zwischen 60° und 64° liegt, stärker bevorzugt 62° beträgt.

5. Druckregelventil (10) nach einem der vorhergehenden Ansprüche, **dadurch gekennzeichnet, dass** in einem von der Zulauf-Steuerkante (56) aus gesehen weiteren Verlauf die Einschnürung (54) einen konkav gekrümmten Abschnitt (62) aufweist.

6. Druckregelventil (10) nach Anspruch 6, **dadurch gekennzeichnet, dass** der Krümmungsradius des konkav gekrümmten Abschnitts (62) ungefähr 3,5 mm beträgt.

7. Druckregelventil (10) nach einem der vorhergehenden Ansprüche, **dadurch gekennzeichnet, dass** durch den konkav gekrümmten Abschnitt (62) der Durchmesser der Einschnürung (54) ein Minimum aufweist und die Einschnürung (54) im weiteren Verlauf nach dem konkav gekrümmten Abschnitt (62) einen Abschnitt (64) mit konstantem Durchmesser aufweist.

8. Druckregelventil (10) nach Anspruch 8, **dadurch gekennzeichnet, dass** der Abschnitt (64) mit konstantem Durchmesser von einem radialen Wandabschnitt (66) begrenzt wird, an dessen radial äußerem Ende eine Ablauf-Steuerkante (68) gebildet ist, die mit einer Ablauföffnung (48) im Gehäuse (12) zusammenwirkt.

9. Druckregelventil nach einem der Ansprüche 8 oder 9, **dadurch gekennzeichnet, dass** der Beginn des Abschnitts (64) mit konstantem Durchmesser so gewählt ist, dass ein Strahl des Hydraulikfluids beim Durchströmen des konkav gekrümmten Abschnitts (62) genau an dieser Stelle den Kontakt zum Ventilschieber (14) verliert und tangential weiter strömt und direkt auf die Regelöffnung (46) trifft.

10. Druckregelventil (10) nach Anspruch 9, **dadurch gekennzeichnet, dass** die Breite der Regelöffnung (46) nur wenig kleiner ist als die Breite der Einschnürung (54) von der Zulauf-Steuerkante (56) bis zur Ablauf-Steuerkante (68).

11. Druckregelventil (10) nach Anspruch 10, **dadurch gekennzeichnet, dass** die Regelöffnung durch eine umlaufende Ringnut (46) im Gehäuse (12) gebildet wird.

## Claims

1. Pressure regulating valve (10), in particular for use in a motor vehicle automatic transmission, with a housing (12), and with a valve slide (14) which is guided in the housing (12) and on which is formed at least one inflow control edge (56) which cooperates with an inflow port (44) in the housing (12), a contraction (54) being present on the valve slide (14) adjacently to the inflow control edge (56) and lying at least approximately opposite a regulating port (46) in the housing (12), the valve slide (14) having a continuous annular groove (70) which lies on that side of the inflow control edge (56) which faces away from the contraction (54), and approximately opposite the inflow port (44), **characterized in that** the width of the annular groove (70) is smaller than the width of the inflow port (44).

2. Pressure regulating valve (10) according to Claim 1, **characterized in that** the annular groove (70) is spaced apart from the inflow control edge (56).

3. Pressure regulating valve (10) according to Claim 3, **characterized in that** the inflow port is formed by a continuous annular groove (44) in the housing (12).

4. Pressure regulating valve (10) according to one of the preceding claims, **characterized in that** the angle of an oblique face (58) of the contraction (54) at the inflow control edge (56) to a longitudinal axis (60) of the valve slide (14) lies between 52° and 72° and preferably between 60° and 64°, more preferably amounts to 62°.

5. Pressure regulating valve (10) according to one of the preceding claims, **characterized in that** further on, as seen from the inflow control edge (56), the contraction (54) has a concavely curved portion (62).

6. Pressure regulating valve (10) according to Claim 6, **characterized in that** the radius of curvature of the concavely curved portion (62) amounts to approximately 3.5 mm.

7. Pressure regulating valve (10) according to one of the preceding claims, **characterized in that**, as a result of the concavely curved portion (62), the diameter of the contraction (54) has a minimum, and further on, after the concavely curved portion (62), the contraction (54) has a portion (64) of constant diameter.

8. Pressure regulating valve (10) according to Claim 8, **characterized in that** the portion (64) of constant diameter is delimited by a radial wall portion (66), at the radially outer end of which is formed a run-off control edge (68) which cooperates with a run-off port (48) in the housing (12).

9. Pressure regulating valve according to either one of Claims 8 and 9, **characterized in that** the start of the portion (64) of constant diameter is selected such that a jet of the hydraulic fluid, when it flows through the concavely curved portion (62), loses contact with the valve slide (14) at exactly this point, flows further on tangentially and impinges directly onto the regulating port (46).

10. Pressure regulating valve (10) according to Claim 9, **characterized in that** the width of the regulating port (46) is only a little smaller than the width of the contraction (54) from the inflow control edge (56) as far as the run-off control edge (68).

11. Pressure regulating valve (10) according to Claim 10, **characterized in that** the regulating port is formed by a continuous annular groove (46) in the housing (12).

## Revendications

1. Soupape de régulation de pression (10), en particulier pour l'utilisation dans une transmission automatique d'un véhicule automobile, comprenant un boîtier (12), un tiroir de soupape (14) guidé dans le boîtier (12), sur lequel est réalisée au moins une arête de commande d'alimentation (56) qui coopère avec une ouverture d'alimentation (44) dans le boîtier (12), un étranglement (54) adjacent à l'arête de commande d'alimentation (56) étant prévu sur le tiroir de soupape (14), lequel étranglement est au moins approximativement opposé à une ouverture de régulation (46) dans le boîtier (12), le tiroir de soupape (14) présentant une rainure annulaire périphérique (70) qui se situe du côté de l'arête de commande d'alimentation (56) opposé à l'étranglement (54) et approximativement en regard de l'ouverture d'alimentation (44), **caractérisée en ce que** la largeur de la rainure annulaire (70) est inférieure à la largeur de l'ouverture d'alimentation (44).

2. Soupape de régulation de pression (10) selon la revendication 1, **caractérisée en ce que** la rainure annulaire (70) est espacée de l'arête de commande d'alimentation (56).

3. Soupape de régulation de pression (10) selon la revendication 3, **caractérisée en ce que** l'ouverture d'alimentation est formée par une rainure annulaire périphérique (44) dans le boîtier (12).

4. Soupape de régulation de pression (10) selon l'une quelconque des revendications précédentes, **caractérisée en ce que** l'angle d'une surface oblique (58) de l'étranglement (54) au niveau de l'arête de commande d'alimentation (56) par rapport à un axe longitudinal (60) du tiroir de soupape (14) est compris entre 52° et 72° et de préférence entre 60° et 64°, plus préférablement vaut 62°.

5. Soupape de régulation de pression (10) selon l'une quelconque des revendications précédentes, **caractérisée en ce que** dans une autre section, vue depuis l'arête de commande d'alimentation (56), l'étranglement (54) présente une portion (62) de courbure concave.

6. Soupape de régulation de pression (10) selon la revendication 6, **caractérisé en ce que** le rayon de courbure de la portion (62) de courbure concave vaut approximativement 3,5 mm.

7. Soupape de régulation de pression (10) selon l'une quelconque des revendications précédentes, **caractérisée en ce que** du fait de la portion (62) de courbure concave, le diamètre de l'étranglement (54) présente un minimum et l'étranglement (54), dans un autre aspect après la portion (62) de courbure concave, présente une portion (64) de diamètre constant.

8. Soupape de régulation de pression (10) selon la revendication 8, **caractérisée en ce que** la portion (64) de diamètre constant est limitée par une portion de paroi radiale (66), à l'extrémité extérieur radiale de laquelle est formée une arête de commande de sortie (68) qui coopère avec une ouverture de sortie (48) dans le boîtier (12).

9. Soupape de régulation de pression selon l'une quelconque des revendications 8 ou 9, **caractérisée en ce que** le début de la portion (64) de diamètre constant est choisi de telle sorte qu'un jet de fluide hydraulique lors du passage à travers la portion (62) de courbure concave perde exactement à cet endroit le contact avec le tiroir de soupape (14) et s'écoule ensuite tangentiellement pour parvenir directement à l'ouverture de régulation (46).

10. Soupape de régulation de pression (10) selon la revendication 9, **caractérisée en ce que** la largeur de l'ouverture de régulation (46) n'est qu'un peu plus petite que la largeur de l'étranglement (54) de l'arête de commande d'alimentation (56) à l'arête de commande de sortie (68).

11. Soupape de régulation de pression (10) selon la revendication 10, **caractérisée en ce que** l'ouverture de régulation est formée par une rainure annulaire périphérique (46) dans le boîtier (12).
